Europäisches Patentamt

European Patent Office

Office européen des brevets

(11) Veröffentlichungsnummer: **0 184 254**
**B1**

(12) **EUROPÄISCHE PATENTSCHRIFT**

(45) Veröffentlichungstag der Patentschrift: **06.02.91**

(51) Int. Cl.⁵: **H 04 N 5/04**

(21) Anmeldenummer: **85201900.9**

(22) Anmeldetag: **19.11.85**

(54) **Schaltungsanordnung zum Unterscheiden der beiden Halbbilder in einem Fernsehsignal.**

(30) Priorität: **01.12.84 DE 3443925**

(43) Veröffentlichungstag der Anmeldung:
**11.06.86 Patentblatt 86/24**

(45) Bekanntmachung des Hinweises auf die
Patenterteilung:
**06.02.91 Patentblatt 91/06**

(84) Benannte Vertragsstaaten:
**DE FR GB IT**

(56) Entgegenhaltungen:
**EP-A-0 136 758**
**DE-A-2 842 800**
**GB-A-2 085 687**

(73) Patentinhaber: **Philips Patentverwaltung GmbH
Wendenstrasse 35 Postfach 10 51 49
D-2000 Hamburg 1 (DE)**
(84) **DE**

(73) Patentinhaber: **N.V. Philips'
Gloeilampenfabrieken
Groenewoudseweg 1
NL-5621 BA Eindhoven (NL)**
(84) **FR GB IT**

(72) Erfinder: **Brock, Thorsten
Richard-Schmidt-Strasse 9
D-2110 Buchholz (DE)**

(74) Vertreter: **Hartmann, Heinrich, Dipl.-Ing. et al
Philips Patentverwaltung GmbH Wendenstrasse
35 Postfach 10 51 49
D-2000 Hamburg 1 (DE)**

Courier Press, Leamington Spa, England.

## Beschreibung

Die Erfindung betrifft eine Schaltungsanordnung zum Unterscheiden der beiden Halbbilder in einem Fernsehsignal, mit einem Detektor, der in Abhängigkeit von der zeitlichen Lage der Synchronimpulse des Fernsehsignals einen ersten oder zweiten Signalzustand annimmt und einem Zeitmeßglied, das mit dem Detektor verbunden ist und in Abhängigkeit von der Dauer des einen Signalzustandes ein Halbbildkennsignal erzeugt.

Eine solche Schaltungsanordnung ist aus der DE-A-28 42 800 bekannt. Sie erzeugt aus den Synchronimpulse mittels zweier in Reihe geschalteter monostabiler Kippstufen, die unterschiedliche Zeitkonstanten aufweisen, einen Halbbildkennimpuls.

Die Synchronimpulse eines Fernsehsignals bestehen in der Regel aus zwei Impulsfolgen, die jeweils den Anfang eines Halbbildes kennzeichnen und die zwischen einer Folge von Horizontalimpulsen liegen. Die beiden Folgen enthalten zuerst mehrere Vor-Ausgleichsimpulse, dann mehrere Bildsynchronimpulse und anschließend mehrere Nach-Ausgleichsimpulse, wobei die Impulse jeweils mit einer halben Zeile Abstand auftreten. Der Abstand zwischen der Vorderflanke des letzten Horizontalimpulses und der Vorderflanke des ersten Vor-Ausgleichsimpulses und der Abstand zwischen der Vorderflanke des letzten Nach-Ausgleichsimpulses und der Vorderflanke des folgenden Horizontalimpulses beträgt bei der ersten Folge eine ganze Zeilendauer und bei der zweiten Folge eine halbe Zeilendauer. Bei der europäischen CCIR-Norm treten z.B. jeweils fünf Vor-Ausgleichsimpulse, Bildsynchronimpulse und Nach-Ausgleichsimpulse auf.

Bei der bekannten Schaltungsanordnung ergibt sich nur dann eine Ausgangssignalveränderung des Detektors (erste monostabile Kippstufe), wenn der Abstand zwischen den Vorderflanken zweier hintereinander liegender Impulse einen Grenzwert überschreitet. Dieser Grenzwert muß hier mindestens größer sein als die halbe Zeilenlänge. Daher ergibt sich nur dann nach einem Horizontalimpuls eine Ausgangssignalveränderung, wenn der Abstand des Horizontalimpulses zum folgenden Impuls einer Zeilendauer entspricht. Während der Halbbildwechsel ist dieses Ausgangssignal unverändert, wobei die Dauer des unveränderten Signals vom Halbbild abhängt. Das Zeitmeßglied (zweite monostabile Kippstufe) erzeugt ein Halbbildkennsignal nach der längeren Dauer des Ausgangssignals des Detektors. Dieser Halbbildkennimpuls erscheint nach dem ersten Horizontalimpuls, der auf den letzten Nach-Ausgleichsimpuls folgt.

Der Erfindung liegt die Aufgabe zugrunde, eine Schaltungsanordnung der eingangs genannten Art so auszubilden, daß während eines Halbbildes das Halbbildkennsignal erzeugt wird, bevor die Nach-Ausgleichsimpulse auftreten.

Dazu weist die erfindungsgemäße Schaltungsanordnung das Kennzeichen auf, daß der Detektor als die Pausen zwischen der Rückflanke eines Synchronimpulses und der Vorderflanke eines darauf folgenden Synchronimpulses messender Impulspausendetektor ausgebildet ist und bei Impulspausen, die zwischen einem ersten und zweiten Grenzwert liegen, einen ersten Signalzustand und bei Impulspausen, die außerhalb dieser Grenzwerte liegen, einen zweiten Signalzustand annimmt.

Die Grenzwerte sind so gewählt, daß die Impulspausen zwischen den Horizontalimpulsen über dem ersten Grenzwert, die Impulspausen zwischen den Bildsynchronimpulsen unter dem zweiten Grenzwert und die Impulspausen zwischen den Ausgleichsimpulsen innerhalb der Grenzwerte liegen, wobei die Impulspause zwischen letztem Horizontalimpuls und erstem Vor-Ausgleichsimpuls beim einen Halbbild auch noch zwischen den Grenzwerten liegen soll. Das bedeutet z.B. für die europäische CCIR-Norm, daß während einer Impulsfolge sechs Impulspausen und während der anderen fünf Impulspausen vorkommen, die innerhalb der Grenzwerte liegen. In Abhängigkeit von der Anzahl der Impulspausen während einer Impulsfolge wird ein Halbbildkennsignal vom Zeitmeßglied abgeleitet.

In einer ersten Weiterbildung der Erfindung ist vorgesehen, daß der Impulspausendetektor einen ersten Zähler und ein Register umfaßt, daß der Zähler die Perioden eines Taktsignals zählt, daß der Zählvorgang durch die Rückflanke eines Synchronimpulses gestartet und durch die Vorderflanke des folgenden Synchronimpulses gestoppt wird und daß das Zählergebnis im Register gespeichert wird. Durch diese Realisierung werden die Impulspausen unterscheidbar. Um jede Impulspause detektieren zu können, ist es notwendig, daß die Periodendauer des Taktsignals kleiner als die kleinste zu messende Impulspause ist.

An dieser Stelle sei erwähnt, daß aus der DE-A-30 37 987 eine Schaltungsanordnung bekannt ist, die einen Zähler enthält, der durch ein Signal gestartet wird, das ein Detektor zuführt, nachdem dieser die Vorderflanke eines Synchronimpulses erkannt hat, das vorher durch einen A/D-Umsetzer gegeben wurde. Der Zähler zählt die Perioden eines Taktsignals und wird gestoppt und zurückgesetzt, wenn die Rückflanke dieses Synchronimpulses vom Detektor erkannt worden ist. Der Zähler ist durch eine Programmstufe so eingestellt, daß er nur ein Ausgangssignal liefert, wenn er einen Zählwert überschritten hat, der der Breite eines Horizontalimpulses entspricht. Die bekannte Schaltungsanordnung hat die Aufgabe, Bildsynchronsignale zu erkennen und daraus einen Vertikalsynchronimpuls abzuleiten.

Die erste Weiterbildung der Erfindung kann nun vorteilhaft so verwendet werden, daß die Taktfrequenz und die Anzahl der Zählerstufen des ersten Zählers so gewählt sind, daß das Register nur den Inhalt der beiden höchstwertigen Zählerstufen speichert und daß die Ausgangssignale des Registers einer logischen Schaltung zugeführt werden und das Ausgangssignal der logischen Schaltung das Ausgangssignal des Impulspausendetektors ist. Die Grenzwerte sind so festgelegt, daß bei geeigneter Wahl der Taktfrequenz und der Anzahl der Zählerstufen die beiden höchstwertigen Zählerstufen dasselbe Ausgangssignal abgeben, wenn Impulspausen zwischen den Vor-Ausgleichsimpulsen oder den Impulspausen verkürzter Dauer zwischen der Rückflanke eines Horizontalimpulses und der Vorderflanke eines Vor-Ausgleichsimpulses auftreten. Auch Störungen, die die Impulspause verändern, werden unterdrückt, da sich erst größere Störungen in den beiden höchstwertigen Zählerstufen auswirken.

In einer weiteren Fortbildung ist vorgesehen, daß aus einem während der Detektierung von Impulspausen, die kleiner als der erste und zweite Grenzwert sind, erzeugten Signal des Impulspausendetektors ein Vertikalsynchronsignal abgeleitet wird. Dieses Vertikalsynchronsignal ist das invertierte Ausgangssignal des niederwertigen Ausgangs des in der ersten Weiterbildung der Erfindung genannten Registers.

Nach einer anderen Weiterbildung der Erfindung ist vorgesehen, daß das Zeitmeßglied ein Halbbildkennsignal abgibt, wenn die Dauer des ersten Signalzustandes einen vorgegebenen Grenzwert überschreitet. Nur wenn nach einem Horizontalimpuls eine Impulspause verkürzter Dauer auftritt, wird nach der Messung der Impulspausen zwischen den Vor-Ausgleichsimpulsen ein Halbbildkennsignalgewonnen.

Nach einer weiteren Ausgestaltung der Erfindung ist vorgesehen, daß das Zeitmeßglied einen zweiten Zähler umfaßt, dessen Takteingang das Synchronsignalgemisch und dessen Freigabeeingang das Ausgangssignal des Impulspausendetektors zugeführt wird und der nur während des ersten Signalzustandes zählt und daß eine Verknüpfungsschaltung vorgesehen ist, die aus den Ausgangssignalen der Zählstufen des zweiten Zählers ein Halbbildkennsignal erzeugt.

Anhand der Zeichnung wird im folgenden ein Ausführungsbeispiel der Erfindung näher beschrieben. Es zeigt:
Fig. 1 ein Ausführungsbeispiel der Erfindung und
Fig. 2 zwei Synchronimpulsfolgen und daraus abgeleitete Signale.

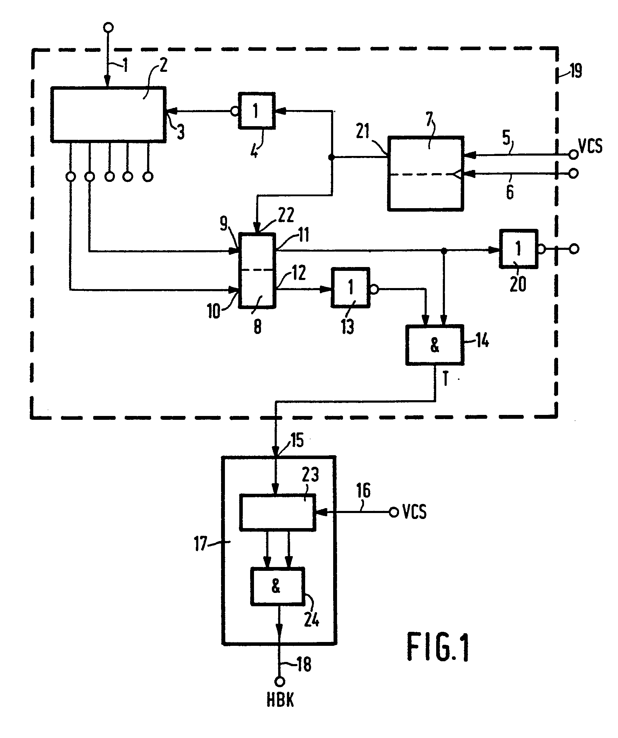

In Fig. 1 ist ein Impulspausendetektor 19 und ein mit diesem verbundenes Zeitmeßglied 17 dargestellt. Der Impulspausendetektor enthält einen Zähler 2, ein D-Kippglied 7, ein Register 8, ein UND-Glied 14 und drei NICHT-Glieder 4, 13 und 20. Ein Taktsignal mit einer Frequenz (Zählfrequenz) von z.B. 0,5 MHz wird dem Takteingang 1 des Zählers 2 zugeführt. Auf den Takteingang 6 des D-Kippgliedes 7 wird ein Taktsignal mit einer Frequenz von z.B. 5 MHz gegeben, wobei dieses Taktsignal mit dem Taktsignal des Zählers synchronisiert ist, und auf den D-Eingang 5 werden die Synchronimpulse VCS eines Fernsehsignals gegeben. Am Ausgang 21 des D-Kippgliedes 7 erscheint erst dann ein neuer Synchronimpuls, wenn eine Vorderflanke des Taktsignals aufgetreten ist, d.h. der Beginn jedes Synchronimpulses wird mit dem Taktsignal synchronisiert. Das Ausgangssignal des D-Kippgliedes 7 wird über das NICHT-Glied 4 dem Freigabe- und Rücksetzeingang 3 des Zählers 2 und dem Takteingang 22 des Registers 8 zugeführt. Die beiden höchstwertigen Ausgänge des Zählers 2 sind mit den Eingängen 9 und 10 des Registers 8 verbunden. Mit der Vorderflanke eines Synchronimpulses wird das Register 8 mit dem aktuellen Zählerinhalt geladen. Das niederwertigere Bit des im Register 8 gespeicherten Zählerinhalts wird über den Ausgang 11 des Registers 8 dem UND-Glied 14 und das höchstwertige Bit über den Ausgang 12 über das NICHT-Glied 13 dem UND-Glied 14 zugeführt.

Das Ausgangssignal T des Impulspausendetektors 19 ist das Ausgangssignal des UND-Gliedes 14 und wird auf den Eingang 15 des Zeitmeßgliedes 17 gegeben. Das Zeitmeßglied 17 enthält einen zweiten Zähler 23 und ein UND-Glied 24. Der Eingang 15 ist ein Freigabeund Rücksetzeingang des Zählers 23. Dem Takteingang 16 des Zählers 23 werden die Synchronimpulse VCS zugeführt. Zwei Ausgänge des Zählers 23 werden durch das UND-Glied 24 verknüpft. Am Ausgang 18 des UND-Gliedes wird das Halbbildkennsignal HBK abgenommen. Das Zeitmeßglied 17 zählt die Anzahl der Impulspausen VCS, wenn ein Freigabesignal am Eingang 15 anliegt.

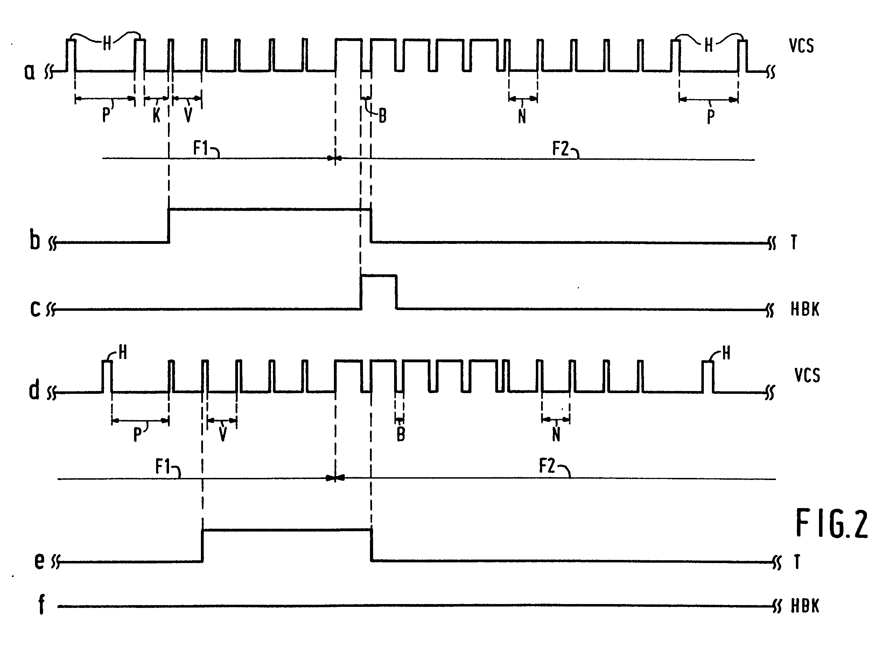

Mit Fig. 2 läßt sich die Funktionsweise der Schaltungsanordnung nach Fig. 1 erläutern. In Fig. 2a und Fig. 2d sind Impulsfolgen dargestellt, die Teil der Fernsehsynchronimpulse beispielsweise nach der europäischen CCIR-Norm sind und den jeweiligen Wechsel eines Halbbildes F1 bzw. F2 kennzeichnen. Nach dem letzten Horizontalimpuls H folgen fünf Vor-Ausgleichsimpulse, fünf Bildsynchronimpulse, fünf Nach-Ausgleichsimpulse und dann wieder Horizontalimpulse. Die Impulspause V nach einem Vor-Ausgleichsimpuls beträgt 30μs, die Impulspause B nach einem Bildsynchronimpuls 4,7μs, die Impulspause N nach einem Nach-Ausgleichsimpuls 30μs und die Impulspause P nach einem normalen Horizontalimpuls H 59μs. Vor dem Wechsel zwischen zweitem und erstem Halbbild tritt nach dem letzten Horizontalimpuls H eine verkürzte Impulspause K von 27μs auf. Durch diese verkürzte Impulspause werden die beiden Halbbilder unterscheidbar.

Dem Eingang 3 des Zählers 2 werden die invertierten Synchronimpulse zugeführt. Über diesen Eingang wird der Zähler zu Beginn einer Synchronimpulspause freigegeben und am Ende der Synchronimpulspause auf Null zurückgesetzt. Der Zähler 2 ist beispielsweise als 5-Bit-Zähler ausgelegt, so daß er mit der vorgegebenen Zählfrequenz von 0,5 MHz die größte Impulspause P zählen kann, ohne überzulaufen. Für die verschiedenen Impulspausen ergeben sich die folgenden binären Zählergebnisse:

Impulspause P: 1 1 1 0 1

Impulspause K: 0 1 1 0 1

Impulspause V: 0 1 1 1 0

Impulspause B: 0 0 0 1 0

Die Impulspausen K und V unterscheiden sich nicht in den beiden höherwertigen Bits, jedoch unterscheiden sie sich von den Impulspausen P und B. Die Impulspause P liegt oberhalb eines ersten Grenzwertes 11000, die Impulspause B liegt unterhalb eines zweiten Grenzwertes 01000 und die Impulspausen K un V liegen zwischen dem ersten und zweiten Grenzwert. Das wird zur Kennzeichnung der beiden Halbbilder ausgenutzt. Deshalb speichert das Register 8 nur die beiden höherwertigen Bits. Durch die Verknüpfung des niederwertigen Bits des Registers 8 und des im NICHT-Glied 13 invertierten höherwertigen Bits im UND-Glied 14 wechselt das Ausgangssignal T des UND-Gliedes 14 von einem zweiten Signalzustand in einen z.B. positiveren ersten Signalzustand, wenn im Register die Kombination 0 1 gespeichert ist.

Das Register 8 speichert das Zählergebnis zu Beginn jeder Synchronimpulsvorderflanke und hält damit das Signal T zwischen den Impulsen konstant. Das NICHT-Glied 4 bewirkt auch eine Verzögerung, so daß zuerst das Zählergebnis in das Register 8 übernommen wird und dann der Zähler 2 zurückgesetzt wird. Wird eine andere Impulspause als K und V gemessen, so geht das Signal wieder in den zweiten Signalzustand zurück. In Fig. 2b tritt wegen der Impulspause K das Signal T früher auf und ist um eine halbe Zeile länger im ersten Signalzustand als in Fig. 2e. Da zur Erzeugung des Signals T nur die beiden höchstwertigen Bits des Zählers 2 ausgenutzt werden, bleibt die Schaltungsanordnung störsicher bei kleineren Abweichungen der Impulspausen und bei Schwankungen der Zählfrequenz.

In dem hier dargestellten Ausführungsbeispiel ist die Anzahl der Zählstufen des Zählers 2 so gewählt worden, daß bei keiner Impulspausenmessung ein Überlauf entsteht. Jedoch kann bei geeigneter Wahl der Zählfrequenz die Anzahl der Zählstufen, z.B. 0,75 MHz bei 5 Zählstufen, so dimensioniert werden, daß z.B. während der Dauer der Impulspause P ein Überlauf vorkommt. Dann läßt sich die Schaltung auch so ausführen, daß nur das höchstwertige Bit gespeichert und ohne logische Schaltung direkt dem Eingang 15 des Zeitmeßgliedes 17 zugeführt wird.

Wechselt das Signal T aus dem zweiten Signalzustand in den ersten Signalzustand, wird der im Zeitmeßglied 17 enthaltene Zähler 23 freigegeben und zählt die Impulspausen der Synchronimpulse. Hat der Zähler sechs Impulspausen gezählt, so wird über das UND-Glied 24 ein Halbbildkennsignal abgegeben. Wechselt das Signal T aus dem ersten Signalzustand in den zweiten, so wird der Zähler 23 im Zeitmeßglied 17 gesperrt und zurückgesetzt. Während des Wechsels vom ersten zum zweiten Halbbild kann also kein Halbbildkennsignal erzeugt werden, da das Zeitmeßglied 17 nur fünf Impulspausen zählt. In Fig. 2c und 2f ist das Halbbildkennsignal dargestellt.

Außer dem Halbbildkennsignal kann auch ein Vertikalsynchronsignal von dieser Schaltungsordnung erzeugt werden. Das niederwertige Bit des im Register 8 gespeicherten Zählergebnisses ist nur nach der Messung der Impulspause B Null. Da dieses Ergebnis nur nach der Messung der Bildsynchronimpulse auftritt, entspricht das invertierte Ausgangssignal des Ausgangs 11 des Registers 8 einem Vertikalsynchronsignal. Daher ist der Ausgang 11 des Registers 8 mit einem NICHT-Glied 20 verbunden. Das Ausgangssignal des NICHT-Gliedes 20 ist also das Vertikalsynchronsignal.

**Patentansprüche**

1. Schaltungsanordnung zum Unterscheiden der beiden Halbbilder in einem Fernsehsignal, mit einem Detektor, der in Abhängigkeit von der zeitlichen Lage der Synchronimpulse des Fernsehsignals einen ersten oder zweiten Signalzustand annimmt und einem Zeitmeßglied, das mit dem Detektor verbunden ist und in Abhängigkeit von der Dauer des einen Signalzustandes ein Halbbildkennsignal erzeugt, dadurch gekennzeichnet, daß der Detektor als die Pausen zwischen der Rückflanke eines Synchronimpulses und der Vorderflanke eines darauf folgenden Synchronimpulses messender Impulspausendetektor ausgebildet ist und bei Impulspausen, die zwischen einem ersten und zweiten Grenzwert liegen, einen ersten Signalzustand und bei Impulspausen, die außerhalb dieser Grenzwerte liegen, einen zweiten Signalzustand annimmt.

2. Schaltungsanordnung nach Anspruch 1, dadurch gekennzeichnet, daß der Impulspausendetektor einen ersten Zähler und ein Register umfaßt, daß der Zähler die Perioden eines Taktsignals zählt, daß der Zählvorgang durch die Rückflanke eines Synchronimpulses gestartet und durch die Vorderflanke des folgenden Synchronimpulses gestoppt wird und daß das Zählergebnis im Register gespeichert wird.

3. Schaltungsanordnung nach Anspruch 2, dadurch gekennzeichnet, daß die Taktfrequenz und die Anzahl der Zählerstufen des ersten Zählers so gewählt sind, daß das Register nur den Inhalt der beiden höchstwertigen Zählerstufen speichert und daß die Ausgangssignale des Registers einer logischen Schaltung zugeführt werden und das Ausgangssignal der logischen Schaltung das Ausgangssignal des Impulspausendetektors ist.

4. Schaltungsanordnung nach Anspruch 1, dadurch gekennzeichnet, daß aus einem während der Detektierung von Impulspausen, die kleiner als der erste und zweite Grenzwert sind, erzeugten Signal des Impulspausendetektors ein Vertikalsynchrosignal abgeleitet wird.

5. Schaltungsanordnung nach Anspruch 3 und 4, dadurch gekennzeichnet, daß das als Vertikalsynchronsignal dienende Ausgangssignal des niederwertigen Ausgangs des Registers invertiert wird.

6. Schaltungsanordnung nach Anspruch 2, dadurch gekennzeichnet, daß die Anzahl der Zählstufen des ersten Zählers mindestens so groß ist, daß der Zähler ohne Überlauf die Zeilenhinlaufzeit mißt.

7. Schaltungsanordnung nach Anspruch 1, dadurch gekennzeichnet, daß das Zeitmeßglied ein Halbbildkennsignal abgibt, wenn die Dauer des ersten Signalzustandes einen vorgegebenen Grenzwert überschreitet.

8. Schaltungsanordnung nach Anspruch 1, dadurch gekennzeichnet, daß das Zeitmeßglied einen zweiten Zähler umfaßt, dessen Takteingang das Synchronsignalgemisch und dessen Freigabeeingang das Ausgangssignal des Impulspausendetektors zugeführt wird und der nur während des ersten Signalzustandes zählt und daß eine Verknüpfungsschaltung vorgesehen ist, die aus den Ausgangssignalen der Zählstufen des zweiten Zählers ein Halbbildkennsignal erzeugt.

## Revendications

1. Montage de circuit pour la discrimination des deux trames d'un signal de télévision, comprenant un détecteur qui adopte un premier ou un second état de signal en fonction de la position dans le temps des impulsions de synchronisation du signal de télévision et un dispositif de mesure du temps qui est connecté au détecteur et qui produit un signal caractéristique de trame en fonction de la durée de l'un des états de signal, caractérisé en ce que le détecteur a la forme d'un détecteur d'intervalles d'impulsions mesurant les intervalles entre le flanc postérieur d'une impulsion de synchronisation et le flanc antérieur d'une impulsion de synchronisation suivante et adoptant un premier état de signal pour des intervalles d'impulsions situés entre une première et une seconde valeur limite, et un second état de signal pour des intervalles d'impulsions situés en dehors de ces valeurs limites.

2. Montage de circuit suivant la revendication 1, caractérisé en ce que le détecteur d'intervalles d'impulsions comprend le premier compteur et un registre, que le compteur compte les périodes d'un signal d'horloge, que l'opération de comptage est mise en route par le flanc postérieur d'une impulsion de synchronisation et est arrêtée par le flanc antérieur de l'impulsion de synchronisation suivante et que le résultat de comptage est stocké dans le registre.

3. Montage de circuit suivant la revendication 2, caractérisé en ce que la fréquence d'horloge et le nombre d'étages de comptage du premier compteur sont choisis tels que le registre ne stocke que le contenu des deux étages de comptage les plus significatifs et que les signaux de sortie du registre sont appliqués à un circuit logique, dont le signal de sortie est le signal de sortie du détecteur d'intervalles d'impulsions.

4. Montage de circuit suivant la revendication 1, caractérisé en ce qu'un signal de synchronisation verticale est dérivé d'un signal du détecteur d'intervalles d'impulsions qui a été produit pendant la détection d'intervalles d'impulsions qui sont en deçà de la première et de la seconde valeur limite.

5. Montage de circuit suivant les revendications 3 et 4, caractérisé en ce que le signal de sortie de la sortie moins significative du registre, servant de signal de synchronisation verticale, est inversé.

6. Montage de circuit suivant la revendication 2, caractérisé en ce que le nombre d'étages de comptage du premier compteur est au moins suffisant pour que le compteur mesure, sans dépassement de capacité, le temps d'aller de ligne.

7. Montage de circuit suivant la revendication 1, caractérisé en ce que le dispositif de mesure du temps fournit un signal caractéristique de trame lorsque la durée du premier état de signal excède une valeur limite prédéfinie.

8. Montage de circuit suivant la revendication 1, caractérisé en ce que le dispositif de mesure du temps comporte un second compteur, dont l'entrée d'horloge reçoit le mélange de signaux de synchronisation, dont l'entrée de libération reçoit le signal de sortie du détecteur d'intervalles d'impulsions et qui ne compte que pendant le premier état de signal, et qu'un circuit logique qui produit un signal caractéristique de trame à partir des signaux de sortie des étages de comptage du second compteur est présent.

## Claims

1. A circuit arrangement for distinguishing between the two fields in a television signal, comprising a detector adapted to assume a first or a second signal state in dependence on the time position of the synchronizing pulses contained in the television signal, and a time measuring element connected to the detector for producing a field identification signal in dependence on the duration of one of the signal states, characterized in that the detector is formed as a pulse interval detector for measuring the intervals between the trailing edge of a synchronizing pulse and the leading edge of a subsequent synchronizing pulse, said detector assuming its first signal state, for pulse intervals located between first and second limit values and its second signal state for pulse intervals located outside these limits values.

2. A circuit arrangement as claimed in Claim 1, characterized in that the pulse interval detector comprises a first counter and a register, that the counter counts the periods of a clock signal, that the counting procedure is started by the trailing edge of a synchronizing pulse and is stopped by the leading edge of the subsequent synchronizing pulse, and that the counting result is stored in the register.

3. A circuit arrangement as claimed in Claim 2, characterized in that the clock frequency and the number of counter stages of the first counter are chosen such that the register only stores the content of the two most significant counter stages and that the output signals of the register are applied to a logic circuit, and that the output signal of the logic circuit is the output signal of the pulse interval detector.

4. A circuit arrangement as claimed in Claim 1, characterized by means for deriving a vertical synchronizing signal from the pulse interval detector signal produced during the detection of pulse intervals which are below the first and second limit values.

5. A circuit arrangement as claimed in Claims 3 and 4, characterized in that the output signal from the least significant output of the register, which output signal serves as the vertical synchronizing signal, is inverted.

6. A circuit arrangement as claimed in Claim 2, characterized in that the number of counter stages of the first counter is at least so large that the counter measures the line trace period without overflow.

7. A circuit arrangement as claimed in Claim 1, characterized in that the time measuring element produces a field identification signal when the duration of the first signal state exceeds a predetermine limit value.

8. A circuit arrangement as claimed in Claim 1, characterized in that the time measuring element includes a second counter whose clock input receives a composite synchronizing signal and whose enable input receives the output signal of the pulse interval detector and which counts only during the first signal state, and that a logic combining circuit is provided which produces a field identification signal from the output signal of the counter stages of the second counter.

FIG.1

FIG.2

a  VCS

H  P  V  K  N  B

b  F1  F2  T

c  HBK

d  VCS  H  P  N  B

e  F1  F2  V  T

f  HBK